# EUROPEAN PATENT SPECIFICATION

(11) **EP 1 326 048 B1**
(45) Date of publication and mention of the grant of the patent: **25.05.2005**
(21) Application number: 02007252.6
(22) Date of filing: 28.03.2002
(51) Int. Cl.: F22G 5/12, F16K 47/04, F16K 47/08

(54) **Steam pressure reducing valve**
Ventil für Druckreduzierung von Heissdampf
Soupape pour réduire la pression de vapeur

(30) Priority: 04.01.2002 US 38985
(43) Date of publication of application: 09.07.2003
(73) Proprietor: Dresser, Inc., Addison, TX 75001 (US)
(72) Inventor: Higuchi, Hiroyuki, Kashiwazaki-shi, Niigata-ken 945-0066 (JP)
(74) Representative: UEXKÜLL & STOLBERG

(56) References cited:
- CH-A- 390 945
- DE-U- 29 801 762
- FR-A- 595 499
- GB-A- 772 058
- US-A- 5 385 121

## Description

### TECHNICAL FIELD OF THE INVENTION

The present invention concerns a steam pressure and conditioning valve.

### RELATED APPLICATION

The present invention includes common subject matter disclosed in U.S. Application Serial No. 10/039,345, entitled Steam Pressure Reducing and Conditioning Valve by the same inventor Hiroyuki Higuchi, filed concurrently on January 4, 2002, under attorney docket number 52643-00350USPT, the disclosure of which is incorporated herein by reference.

### BACKGROUND OF THE INVENTION

Applicant has discovered a further refinement and improvement to the steam pressure reducing and conditioning valve (hereinafter "conditioning valve") for which he has made application for letters patent in application U.S. Serial No. 10/039,345 by inventor Hiroyaki Higuchi filed concurrently with this application on January 4, 2002 under attorney docket number 52643-00350USPT.

A first embodiment of the invention as described and claimed in the aforementioned related application may be described as follows.

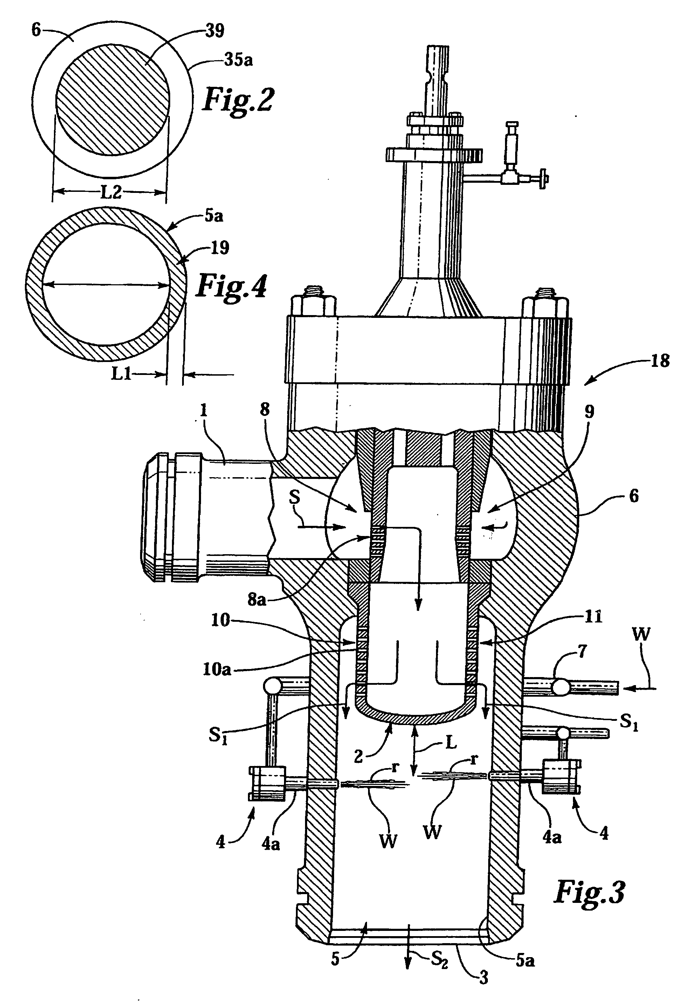

As illustrated in Figure 3, a first embodiment of the present invention comprises a vapor change valve 18 for passing hot and high pressure steam S inflowing from a first port 1 through a pressure reducing section 2, and supplying subcooled water W and discharging desuperheated and depressurized steam S2 from a second port 3. One or more nozzles 4 for supplying subcooled water W are provided in proximity to said pressure reducing section 2. A flat nozzle 4a injects subcooled water W in a planar pattern r. Nozzle 4 is positioned so that there is a predetermined distance L between the jet pattern r of subcooled water W injected from flat nozzle 4a and the pressure reducing section 2. In the first embodiment, conditioning valve 18 includes a pressure reducing section 2 with a bottom and a cylindrical shape. The subcooled water W jet pattern r is selected to be substantially parallel to the bottom of the pressure reducing section 2. It will be understood by those skilled in the art that one or more of nozzles 4 for injecting moisture W may be juxtaposed in several stages in the a moisture supply section 5 of valve 18. The nozzle 4 disposed in the position nearest to the pressure reducing section 2 is a flat nozzle 4a. Other nozzles 4 disposed further away from the pressure reducing section 2 may have jet patterns of either planar or conical.

Applicant has tested the first embodiment of the conditioning valve as illustrated in Figure 3 and determined the following limitations:

First, as shown in Fig. 4, the vapor discharge area 19 has an annular shape narrow in width L1. Consequently, during the collision of outflow vapor S1 with the subcooled water mist W, a part of subcooled water mist W crosses the moisture supply section 5, and impinges against the opposite side wall face 5a and liquefies (condenses), reducing the effective amount of subcooled water mist W to be contacted by the steam S1 flow.

Second, as shown in Fig. 4, the vapor discharge area 19 is near the wall face 5a of the body 6. The collision with the subcooled water mist W tends to occur in the vicinity of the wall face 5a.

As the result, a part of chilled water mist W is directed back to the proximal side wall face 5a and liquefied (condensed), so the subcooled water mist W does not work as effectively as it might.

DE Utility Model No. U1 298 01 762 and CH Patent No. 390,945 describe other steam conditioning apparatuses. The first describes a valve for reducing the pressure and temperature of superheated steam. The valve includes a housing with a flow-through channel therein, the channel including an inlet channel, a valve seat, and an outlet channel. The valve seat divides the inlet channel from the outlet channel and cooperates with a closing member that is movable relative to the valve seat between a closed and an open position via a valve actuator. The valve also includes a steam bypass that branches off from the main steam stream before a pressure-reduction stage for the main steam stream, the pressure-reduction stage having a pressure-reduction element that extends as a continuation of the closing member into the pressure-reduction stage. The bypassed steam runs parallel to the outlet channel and returns to it after the pressure-reduction stage, at the point where a water-injection apparatus discharges.

CH Patent No. 390,945 describes an apparatus for controlling the pressure and temperature of a gaseous working medium by supplying a cooling medium to a reduction station. The apparatus includes an injection apparatus for the cooling medium after the throttling of the medium by a throttling member. The injection apparatus is actuated by means of a branch stream of the working medium and is used in cooperation with a Venturi nozzle. The apparatus also conducts into the working medium a supply of water that is fed from outside the nozzle at the narrowest nozzle point, the cooling medium being used to atomize the water. The branch channel is located forward of the throttling member but behind a regulating valve so that the main stream and the branch stream are collectively shut-off by means of the regulating valve.

### BRIEF DESCRIPTION OF THE DRAWINGS

The disclosed invention will be described with reference to the accompanying drawings, which show important sample embodiments of the invention and which are incorporated in the specification hereof by reference. A more complete understanding of the present invention may be had by reference to the following Detailed Description when taken in conjunction with the accompanying drawings, wherein:
Fig. 1 is a side view of a preferred embodiment of conditioning valve of the present invention having a portion of the valve cut away to illustrate a partial cross-section view;
Fig. 2 is a planar representation of the vapor discharge pattern of the preferred embodiment of the present invention;
Fig. 3 is a side view of a first embodiment of conditioning valve having a portion of the valve cut away to illustrate a partial cross section view;
Fig. 4 is a planar representation of the vapor discharge pattern of the conditioning valve of Figure 3; and
Fig. 5 is a side view of a preferred embodiment of conditioning of the present invention having a portion of the valve cut away to illustrate a partial cross-section view.

### SUMMARY OF THE INVENTION

In the preferred embodiment, the present invention comprises a conditioning valve 20, having a first port 21 for inflowing a superheated steam S, a body 23 having a diffuser 22 where small holes 22a are scattered on the side, and a second port 24 for discharging desuperheated and depressurized steam S2, one or more nozzles 25 supplying subcooled water W to the depressurized steam S1 exiting from the small hole 22a of the diffuser 22 side face toward the second port 24, wherein a protrusion 26 projects inward in a vapor discharge path 29 of said body 23 between the diffuser 22 and a moisture supply section 35, and it is so structured that the depressurized steam S1 exiting from said small hole 22a is concentrated into the body 23 by this protrusion 26, made to pass inside said protrusion 26, and then cooled down by supplying the steam S1 with subcooled water W.

In operation, superheated steam S inflowing from a first port 21 passes through the small hole 22a of the diffuser 22, is concentrated into the body 23 by the protrusion 26 provided between the diffuser 22 and the moisture supply section 35, made to pass inside said protrusion 26, supplied with moisture W from the moisture supply section 35, and then discharged as depressurized and desuperheated steam S2 from the second port 24.

Additionally, when the moisture W is further subdivided by the collision of a high speed vapor S1 flow with the subcooled water W, and this dispersed subcooled water W is contacted by the vapor S1 flow, steam S1 can be cooled down effectively (if the steam S1 flows slowly, the moisture will not be subdivided (dispersed) and will not cool steam S1.

In the preferred embodiment of the present invention, as distinguished from the first embodiment disclosed in Figs. 3 and 4, the vapor flow area 39 has a circular shape of large width L2 as shown in Fig. 2. The protrusion 26 provided in the vapor discharge path 29 of the body 23 decreases the cross-sectional flow area and increases the velocity of steam S1. As the result, the collision of a part of moisture W with the opposite side wall face 35a mentioned as the first limitation of the first embodiment is reduced, and moreover, the contacting of the subcooled water W and the steam S1 takes place in the middle, and not in the vicinity of the wall face 35a as in the second limitation of the first embodiment. As a result, a smaller portion of the subcooled water W is returned to the proximal side wall face 35a and impinged against it, achieving, thereby, an effective cooling.

### DETAILED DESCRIPTION OF THE PREFERRED EMBODIMENT

Reference is now made to the Drawings wherein like reference characters denote like or similar parts throughout the Figures.

This preferred embodiment comprises a cylindrical body 23 provided with a first port 21 for introducing a superheated steam S and a second port 24 for discharging desuperheated and depressurized steam S2. The body 23 is provided with a pressure reducing section 27 for depressurizing the superheated steam S, and a moisture supply section 35 for desuperheating by injecting droplets of subcooled water W into the vapor S1 having passed through this pressure reducing section 27. It will be understood by those skilled in the art that vaporization of the subcooled water droplets will lower the temperature (desuperheat) the steam S1.

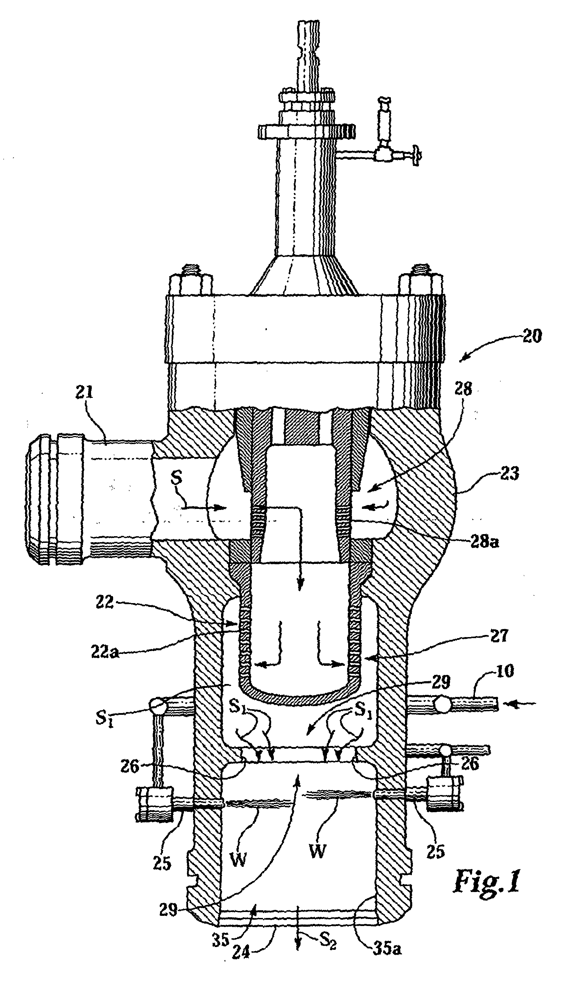

The pressure reducing section 27 comprises, as shown in Fig. 1, a vertically movable plug 28 having a small hole section provided with small holes 28a scattered around a cylindrical body with an open lower end, and a diffuser 22 fixed to the body 23 at the lower position of this plug 28, and provided with small holes 22a scattered around a cylindrical body with a bottom and an open upper end, and is structured to depressurize superheated steam S by passing through this plug 28 and the diffuser 22 and transform it into an annular flow vapor S1 along the inner wall 35a of the body 23.

The moisture supply section 35 includes nozzles 25 for supplying atomized subcooled water ("moisture") W in the longitudinal direction of the body 23 and in several stages longitudinally in the vapor S1 flow direction.

. Moreover, this embodiment disposes a protrusion 26 in the vapor discharge path 39 of the body 23 between the diffuser 22 and the moisture supply section 35.

This protrusion 26 is formed, as shown in Fig. 1, by projecting the inner wall 35a of the body 23 a predetermined amount. In the preferred embodiment, the protrusion has an annular section in its plan view. However, discontinuous projections may be used or projection having non-annular plan views may be used.

Consequently, the steam S1 exiting from the diffuser 22 is concentrated inward from the body by this protrusion 26 increasing the velocity of steam S1, and passes through the moisture supply section 35 in a cylindrical state.

In operation, the superheated steam S inflowing from . a first port 21 passes through the small hole 22a of the diffuser 22, exits opening 22a in diffuser 22 along the inner wall 35a of the body 23, once concentrated into the body 23 by the protrusion 26 provided between the diffuser 22 and the moisture supply section 35, made to pass inside said protrusion 26, supplied with moisture W from the moisture supply section 35, and then discharged as desuperheated and depressurized steam from the second port 24.

Therefore, this preferred embodiment can prevent the moisture W from condensing as much as possible, and deploy an extremely effective cooling function.

The structure of the preferred embodiment can transfer the flow direction energy of the vapor S1 more effectively to the moisture W, so that the subcooled water W supplied from the moisture supply section 35 will be dispersed more effectively by the vapor S flow.

In theory, droplets of subcooled water W will condense less and result in better cooling effect if the moisture W is supplied to an enlarged contact area for steam S1 by increasing the velocity S1; however, the aforementioned first embodiment cannot meet both conditions at the same time (if the gap between the body 23 and the diffuser 22 is restricted to increase the S1 velocity, naturally, the vapor S1 contact area becomes narrower. If the flow rate is increased too much, large noise or other problems may happen).

In this respect, adopting the aforementioned structure of the preferred embodiment can deploy a better cooling function than the first embodiment.

To be more specific, for instance, in the first embodiment of Figures 3 and 4, the vapor S1 flow area has an annular configuration 19 as shown in Fig. 4. wherein the area where the vapor S1 is supplied with moisture W from the moisture supply section 5. Therefore, the width (distance) where the vapor S1 contacts the moisture W is L1, while, in the preferred embodiment of Figures 1 and 2, by adopting a structure wherein a protrusion 26 is disposed on the wall face 35a of the body 23, for instance, in the case where this protrusion 26 is annular, the vapor S flow has a circular configuration 39 as shown in Fig. 2; therefore, the width (distance) where the steam S1 contacts moisture W to be supplied to this annular steam S1 is L2 which is larger (in the aforementioned comparison, it is supposed that the subcooled water W is supplied to a cylinder where the cross-section area of embodiments is identical.

A larger steam S1 width L2 means that the area where the even flow rate distribution is sustained immediately after the exiting of vapor S1 (potential core area) extends further downstream, and therefore, this embodiment providesan enlarged steam width, and maintains the steam S1 high velocity further downstream (to the moisture supply section 35).

Moreover, in the preferred embodiment, the presence of the protrusion 26 provided in the vapor discharge path 29 of the body 23 prevents the collision of steam S1 and moisture W in the immediate vicinity of the wall 35a, by concentrating the steam S1 from the diffuser 23 inward from the body 23.

As mentioned before, this embodiment provides a large steam S1 flow by concentrating the vapor S1 inward, by disposing a protrusion 26 on the wall face 23a of the body, and moreover, to sustain a higher velocity (flow rate immediately after the expulsion 22) further downstream (because the flow direction energy of the vapor S1 can be transferred more effectively to the moisture W), creating an environment where the moisture W supplied from the moisture supply section 35 arrives hardly as much at the opposed wall face 35a of the body 23, and where the moisture W returns hardly to the supply side wall face 35a, preventing the liquefaction (condensation) and deploying an extremely effective cooling function.

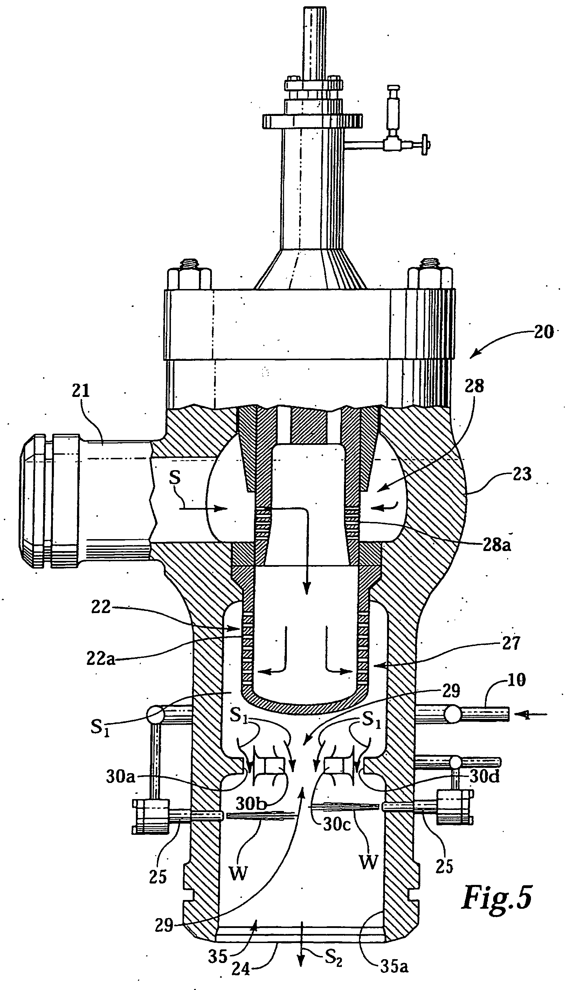

Fig. 5 illustrates another preferred embodiment of a conditioning valve of the present invention. The embodiment of the conditioning valve illustrated by Fig. 5 is similar to the embodiment in Fig. 1, except that the Fig. 1 embodiment has a plurality of protrusions 30 for directing flow inward. Protrusions 30 may be formed by projecting inner wall 35a of body 23 a predetermined amount.

A preferred embodiment of the invention has been illustrated in the accompanying Drawings and described in the foregoing Detailed Description. It will be understood that the invention is not limited to the embodiment disclosed, but is capable of numerous modifications without departing from the scope of the invention as claimed.

## Claims

1. A steam pressure reducing and conditioning valve (20) comprising
a pressure reducing section (27) for reducing steam pressure, the pressure reducing section adapted to transform the steam flour into an annular flow, **characterized by** that the value further comprises:
one or more protrusions (26) downstream of the pressure reducing section for concentrating the annular flow inward; and
a moisture supply section (35) downstream of the pressure reducing section, the moisture supply section comprising one or more nozzles (25) for injecting water into the concentrated flow, wherein at least one nozzle is downstream of at least one of the one or more protrusions.

2. The valve of Claim 1, wherein the one or more protrusions are annular.

3. The valve of Claim 2, wherein each of the one or more nozzles are downstream of the one or more protrusions.

4. The valve of claim 1, wherein the moisture supply section comprises an inner wall face (35a), and the one or more protrusions direct the annular flow inward away from the inner wall face.

5. The valve of Claim 1, wherein the moisture supply section comprises an inner wall face (35a) that defines a first area perpendicular to the concentrated flow, and the one or more protrusions define a second area perpendicular to the annular flow, the second area being smaller than the first area.

6. A method of conditioning superheated steam, the method comprising:
receiving a flow of superheated steam in a first port (21);
transforming the flow into an annular flow in a pressure reducing section (27), **characterized by** that the method further comprises the steps of:
directing the annular flow inward to produce a concentrated flow;
injecting water into the concentrated flow as it passes through a moisture supply section (35); and
discharging the steam out a second port (24).

7. The method of Claim 6, wherein directing the annular flow inward comprises directing the flow parallel to and spaced apart from an inner wall (35a) of the moisture supply section.

8. The method of Claim 7, wherein directing the annular flow inward comprises directing the flow through a first area perpendicular to the flow that is smaller than a moisture supply section area perpendicular to the flow.

9. The method of Claim 6, comprising increasing flow speed prior to injecting water into the flow.

## Patentansprüche

1. Dampfdruckreduzierungs- und Konditionierungsventil (20), mit
einem Druckreduzierungsabschnitt (27) zum Reduzieren des Dampfdrucks, wobei der Druckreduzierungsabschnitt dazu ausgestaltet ist, um die Dampfströmung in eine ringförmige Strömung umzuwandeln, **dadurch gekennzeichnet, dass** das Ventil außerdem aufweist:
einen oder mehrere Vorsprünge (26) stromabwärts des Druckreduzierungsabschnitts, um die ringförmige Strömung nach innen gerichtet zu konzentrieren; und
einen Feuchtigkeitszuführabschnitt (35) stromabwärts des Druckreduzierungsabschnitts, wobei der Feuchtigkeitszuführabschnitt eine oder mehrere Düsen (25) zum Einspritzen von Wasser in die konzentrierte Strömung aufweist, wobei zumindest eine Düse stromabwärts von zumindest einem von dem einen oder den mehreren Vorsprüngen angeordnet ist.

2. Ventil nach Anspruch 1, bei dem der eine oder die mehreren Vorsprünge ringförmig sind.

3. Ventil nach Anspruch 2, bei dem jede von der einen oder mehreren Düsen stromabwärts von dem einen oder den mehreren Vorsprüngen angeordnet ist.

4. Ventil nach Anspruch 1, bei dem der Feuchtigkeitszuführabschnitt eine innere Wandfläche (35a) aufweist, und der eine oder die mehreren Vorsprünge die ringförmige Strömung weg von der inneren Wandfläche nach innen richten.

5. Ventil nach Anspruch 1, bei dem der Feuchtigkeitszuführabschnitt eine innere Wandfläche (35a) aufweist, die ein erstes Gebiet senkrecht zu der konzentrierten Strömung definiert, und der eine oder die mehreren Vorsprünge ein zweites Gebiet senkrecht zu der ringförmigen Strömung definieren, wobei das zweite Gebiet kleiner ist als das erste Gebiet.

6. Verfahren zum Konditionieren von überhitztem Dampf, wobei das Verfahren umfasst:
Empfangen einer Strömung aus überhitztem Dampf in einem ersten Anschluss (21);
Umwandeln der Strömung in eine ringförmige Strömung in einem Druckreduzierungsabschnitt (27), **dadurch gekennzeichnet, dass** das Verfahren außerdem die Schritte umfasst:
Richten der ringförmigen Strömung nach innen, um eine konzentrierte Strömung zu erzeugen;
Einspritzen von Wasser in die konzentrierte Strömung, wenn diese durch einen Feuchtigkeitszuführabschnitt (35) strömt; und
Ausstoßen des Dampfes aus einem zweiten Anschluss (24).

7. Verfahren nach Anspruch 6, bei dem das Richten der ringförmigen Strömung nach innen das Richten der Strömung parallel zu und beabstandet von einer inneren Wand (35a) des Feuchtigkeitszuführabschnitts beinhaltet.

8. Verfahren nach Anspruch 7, bei dem das Richten der ringförmigen Strömung nach innen das Richten der Strömung durch ein erstes Gebiet senkrecht zu der Strömung beinhaltet, das kleiner ist als ein Gebiet des Feuchtigkeitszuführabschnitts senkrecht zu der Strömung.

9. Verfahren nach Anspruch 6, mit dem Erhöhen der Strömungsgeschwindigkeit vor dem Einleiten von Wasser in die Strömung.

## Revendications

1. Soupape (20) de réduction et de conditionnement de la pression de vapeur d'eau comprenant :
une section (27) de réduction de pression, la section de réduction de pression étant à même de transformer le flux de vapeur d'eau en un flux annulaire, **caractérisée en ce que** la soupape comprend en outre :
une ou plusieurs saillies (26) en aval de la section de réduction de pression pour concentrer le flux annulaire vers l'intérieur ; et
une section (35) d'alimentation en humidité en aval de la section de réduction de pression, la section d'alimentation en humidité comprenant une ou plusieurs buses (25) pour injecter de l'eau dans le flux concentré, au moins une buse se trouvant en aval d'au moins une ou saillie de la ou des saillies.

2. Soupape selon la revendication 1, dans laquelle la (ou les) multiples saillie(s) est (sont) annulaire(s).

3. Soupape selon la revendication 2, dans laquelle chaque buse ou chacune des buses est en aval de la ou des saillies.

4. Soupape selon la revendication 1, dans laquelle la section d'alimentation en humidité comprend une face de paroi interne (35a) et la ou les saillies dirigent le flux annulaire vers l'intérieur en l'éloignant de la face de la paroi interne.

5. Soupape selon la revendication 1, dans laquelle la section d'alimentation en humidité comprend une face de paroi interne (35a) qui définit une première surface perpendiculaire au flux concentré, et la ou les saillies définissent une seconde surface perpendiculaire au flux annulaire, la seconde surface étant plus petite que la première surface.

6. Procédé de conditionnement de vapeur d'eau surchauffée, le procédé comprenant :
la réception d'un flux de vapeur d'eau surchauffée dans un premier orifice (21) ;
la transformation du flux en un flux annulaire dans une section (27) de réduction de pression, **caractérisée en ce que** le procédé comprend en outre les étapes suivantes :
on dirige le flux annulaire vers l'intérieur pour produire un flux concentré ;
on injecte de l'eau dans le flux concentré lorsqu'il passe à travers une section d'alimentation en humidité (35) ; et
on décharge la vapeur d'eau par un second orifice (24) .

7. Procédé selon la revendication 6, dans lequel la direction du flux annulaire vers l'intérieur comprend la direction du flux parallèlement et séparément de la paroi interne (35a) de la section d'alimentation en humidité.

8. Procédé selon la revendication 7, dans lequel la direction du flux annulaire vers l'intérieur comprend la direction du flux à travers une première surface perpendiculaire au flux qui est plus petite qu'une surface d'alimentation en humidité perpendiculaire au flux.

9. Procédé selon la revendication 6, comprenant l'augmentation de la vitesse du flux avant injection d'eau dans le flux.
